(19) 

Europäisches Patentamt

European Patent Office

Office européen des brevets

(11) **EP 4 726 364 A1**

(12) **EUROPEAN PATENT APPLICATION**

(43) Date of publication:
**15.04.2026 Bulletin 2026/16**

(21) Application number: **24206467.3**

(22) Date of filing: **14.10.2024**

(51) International Patent Classification (IPC):
**G01N 21/17** (2006.01)    **G01N 29/24** (2006.01)

(52) Cooperative Patent Classification (CPC):
**G01N 21/1702; G01N 29/2418;** G01N 2021/1704;
G01N 2201/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nederlandse Organisatie voor toegepast- natuurwetenschappelijk onderzoek TNO 2595 DA 's-Gravenhage (NL)**

(72) Inventors:
• **CHENG, Lun-Kai**
  **2595 DA 's-Gravenhage (NL)**
• **VAN NEER, Paul Louis Maria Joseph**
  **2595 DA 's-Gravenhage (NL)**
• **HARMSMA, Peter Johan**
  **2595 DA 's-Gravenhage (NL)**

(74) Representative: **V.O.**
  **P.O. Box 87930**
  **2508 DH Den Haag (NL)**

(54) **OPTICAL MEASUREMENT SYSTEM AND METHOD FOR GAS IDENTIFICATION USING PHOTOACOUSTIC EFFECT**

(57)    The invention relates to a system and method for identifying the concentration of a gas using the photoacoustic effect. The system comprises a gas cell for containing a gas sample, an excitation light source with amplitude and/or wavelength modulation that emits light matching an absorption line of the target gas, an optical waveguide sensor adjacent to the gas cell for measuring acoustic pressure, and a processing unit to determine gas concentration from the acoustic pressure. The method involves placing the gas sample in the gas cell, directing modulated light into the cell, inducing a photoacoustic effect by the interaction of light and gas, measuring acoustic pressure via the optical waveguide sensor, and using the processing unit to determine the gas concentration. This system and method enable precise and efficient gas identification based on photoacoustic signals.

Fig. 1

**Description**

FIELD OF THE INVENTION

The invention relates to an optical measurement system for identification of a gas based on a photoacoustic effect. The invention also relates to a method for identifying a gas in a sample using a photoacoustic effect. Further, the invention relates to the use of optical waveguide sensors to measure acoustic pressures generated within a gas cell.

BACKGROUND TO THE INVENTION

Photoacoustic spectroscopy (PAS) has become an important technique in trace gas detection and analysis, particularly in fields requiring the precise measurement of minute concentrations of contaminants such as environmental monitoring, medical diagnostics, and industrial process control. The underlying principle of PAS involves the conversion of absorbed optical energy into acoustic energy, typically measured by an acoustic detector to determine gas concentrations based on the strength of the produced acoustic signal.

Despite its advantages, the conventional PAS systems suffer from several significant limitations impacting their efficiency and versatility. Firstly, traditional PAS setups typically utilize electronic or piezoelectric microphones to detect the acoustic signals generated by the photoacoustic effect. These microphones often exhibit limited sensitivity and noise issues, particularly in the context of detecting extremely low concentrations of gases. The sensitivity is constrained by the physical properties and operational limits of the microphones, which can struggle to detect subtle changes in acoustic pressure, especially in noisy environments.

Additionally, conventional systems predominantly rely on narrow-band acoustic excitation, which limits the ability to distinguish between different gases with overlapping absorption spectra. This limitation arises because the system's response at a single modulation frequency provides limited spectral information, making it difficult to disambiguate between different gases or accurately measure multiple gas species simultaneously.

Another challenge in existing PAS systems is related to the scalability and flexibility of the gas cell design. Most systems use a narrow gas tube to enhance the amplitude of the photoacoustic effect, as the pressure amplitude within the gas tube scales inversely with the square of its diameter. This design limitation restricts the effective optical path length and thus the absorption of light within the gas cell, diminishing the overall sensitivity of the system. Additionally, the use of narrow tubes makes it challenging to incorporate multiple light sources or optical configurations, further limiting the system's capability to simultaneously detect multiple gases.

Therefore, there is a clear need for advancements in photoacoustic spectroscopy that address these limitations, particularly in terms of sensitivity, selectivity, and/or multi-gas detection capabilities.

SUMMARY OF THE INVENTION

It is an object of the invention to provide for a method and a system that obviates at least one of the above mentioned drawbacks.

Additionally or alternatively, it is an object of the invention to provide for an improve optical measurement system for identification of a gas based on a photoacoustic effect.

Additionally or alternatively, it is an object of the invention to provide for gas identification with an enhanced sensitivity and/or specificity.

Thereto, the invention provides for an optical measurement system for identification of a gas based on a photoacoustic effect, comprising: a gas cell configured to contain a gas sample; an excitation light source with amplitude and/or wavelength modulation configured to direct light into the gas cell, wherein the excitation light source is configured to emit light with a wavelength that matches an absorption line of the gas to be identified such as to induce a photoacoustic effect by modulation of the amplitude or the wavelength of the light source; an optical waveguide sensor arranged adjacent to the gas cell and configured to measure a value indicative of an acoustic pressure within the gas cell generated as a result of the photoacoustic effect; and a processing unit configured to determine a value indicative of a gas concentration based at least on the measured value indicative of the acoustic pressure.

The optical waveguide sensor adjacent to the gas cell measures acoustic pressure generated by the induced photoacoustic effect, and a processing unit analyzes this data to deduce gas concentration/type. Advantageously, a highly accurate and reliable system for gas identification is obtained.

The sensor may include one or more optical fibers that can detect minute changes in pressure within the gas cell. As the gas absorbs the modulated light, it heats up and expands according to the light modulation, creating pressure waves. These waves deform the optical fiber slightly, changing its optical properties, such as the length or refractive index of the optical waveguide sensor, which can be detected by the processing unit with high precision.

The direct placement of the optical waveguide sensor next to the gas cell allows for real-time monitoring and immediate detection of changes in gas concentration, which is important for applications requiring rapid responses.

The excitation light source is configured to allow the light source to be tuned precisely to the absorption lines of the target gas, which are unique spectral signatures that different gases absorb at specific wavelengths. By modulating the wavelength or amplitude of the light, the system can induce a stronger and more distinct photoacoustic effect, which is the basis for detecting and identifying the gas.

By matching the light source's wavelength with the gases absorption line, the system maximizes the photoacoustic effect, improving both the sensitivity and selectivity of gas detection. This is particularly beneficial in environments where multiple gases are present, or where the detection of low concentration levels can be important.

The processing unit can be configured to interpret the data collected by the optical waveguide sensor. This unit analyzes the changes in optical properties of the optical waveguide sensor caused by the acoustic pressures and computes the concentration of the gas based on these measurements.

The system's ability to analyze the specific photoacoustic signatures of different gases enables it to distinguish between similar gases and accurately identify the target gas in a mixture.

Optionally, the optical waveguide sensor includes at least one optical fiber attached to the gas cell and/or a component connected to the gas cell.

This configuration permits direct and efficient measurement of the acoustic pressures induced by the photoacoustic effect, enabling real-time, accurate monitoring of gas concentrations. The proximity and direct attachment of the optical fiber to the gas cell allow for immediate detection of minute changes in acoustic pressure induced gas cell deformation, thus improving the system's sensitivity and response time.

A direct transmission path can be provided for the acoustic signals to the fiber, minimizing any delay or loss in signal integrity. This can be important for systems requiring high-resolution and high-sensitivity detection capabilities, as it ensures that even the smallest pressure variations within the gas cell, indicative of minute concentrations of target gases, are accurately captured. Furthermore, the system's responsiveness and accuracy can be effectively improved. By placing the optical fiber in close proximity to the source of the acoustic signals, the system can instantaneously detect changes in acoustic pressure.

The direct attachment of the optical fiber reduces complexities and potential mechanical interferences that can impact the measurement. This streamlined configuration not only simplifies the design and reduces the cost of the system but also enhances its reliability and durability by minimizing the number of components susceptible to wear and failure.

The use of the optical fiber, known for its flexibility and small form factor, allows for the design of compact and versatile gas detection systems. This adaptability can be important for integrating the system into a wide range of industrial applications, where space constraints and environmental conditions can vary significantly.

Optionally, the optical fiber is wrapped around at least a part of the gas cell.

The optical fiber component of the waveguide sensor is wrapped around at least a part of the gas cell, which optimizes the detection of acoustic pressures by increasing the interaction between the length of the sensing fiber and the surface of the gas cell. This wrapping technique enhances the system's ability to capture deformations and acoustic pressures, directly translating these physical changes into measurable optical signals, thereby increasing the accuracy and sensitivity of gas detection.

An improved interaction surface provided by the optical fiber being in close physical contact with the surface of the gas cell can be obtained. By wrapping the fiber around the gas cell, it effectively becomes a part of the cell's structure. Such integration can ensure that any deformation of the gas cell, caused by changes in internal pressure attributable to the photoacoustic effect, is directly transferred to the optical fiber. These deformations cause minute changes in the length and tension of the fiber, which can be accurately measured using optical techniques such as interferometry of the processing unit.

The proximity of the fiber to the source of the acoustic signals (i.e., the gas cell walls) allows for immediate and sensitive detection of changes. Since the fiber is wrapped around the gas cell, it experiences changes in dimensions (expansion and contraction) directly corresponding to the acoustic pressures within the cell. This direct transfer of physical changes to the sensor increases the fidelity of the measurements and reduces the lag between event and detection.

By wrapping the optical fiber, the system captures a more comprehensive range of acoustic signals, not just localized pressures but also those that propagate along the length of the gas cell. This comprehensive capture can be important for detecting low-amplitude acoustic waves that may not sufficiently influence a single, point-based sensor.

The mechanical deformations of the gas cell (and thus the optical fiber) modulate the properties of the fiber and hence the light traveling through the fiber. For instance, stretching and compressing the fiber alter its refractive index and physical path length, both of which can be precisely measured to infer the original mechanical disturbance.

Advantageously, the system can detect relatively small changes in pressure and by extension, lower concentrations of gas, which may be important in applications requiring high sensitivity such as pollutant monitoring or trace gas analysis in industrial processes. This sensitivity is particularly advantageous when dealing with gases that produce subtle photoacoustic effects.

When the fiber is wrapped around the gas cell, any expansion or contraction of the cell wall caused by the photoacoustic pressure changes directly affects the fiber. These changes in the fiber are detectable as variations in the light's phase, intensity, or wavelength due to the modulation of the fiber's refractive index and length. Optical sensors and interferometric setups integrated into the system can detect these minute changes with high precision, converting them into electronic signals that can be processed to yield accurate measurements of gas concentration.

Optionally, the optical fiber is wrapped in multiple layers around at least a part of the gas cell.

In some examples, the mechanical stiffness of the combined gas cell and optical fiber assembly (hereinafter referred to as the "tube-plus-fiber") is predominantly governed by the stiffness of the optical fiber rather than that of the gas cell wall. The sensitivity of the optical measurement system can reach an asymptotic limit. This condition may arise when the number of windings of the optical fiber per unit length along the gas cell exceeds a critical threshold, for instance defined by the inequality:

(number of windings per unit length) > d.E/k
where d represents the wall thickness of the gas cell, E denotes the Young's modulus of the material constituting the gas cell wall, and k signifies the stiffness of the optical fiber, expressed as force per unit strain.

Under these circumstances, the optical fiber imposes a mechanical constraint on the gas cell wall, effectively dominating the structural stiffness of the tube-plus-fiber assembly. Consequently, further increases in the number of windings may not proportionally enhance the sensitivity of the optical waveguide sensor to acoustic pressure variations induced by the photoacoustic effect. As a result, the system reaches an asymptotic maximum in sensitivity, determined by the mechanical interplay between the optical fiber and the gas cell wall, beyond which additional windings may yield merely negligible improvements in detection performance.

In some examples, a gas cell constructed with a very thin-walled tube is utilized, such as a polymer tube, within the optical measurement system. The employment of a thin-walled gas cell significantly reduces the mechanical stiffness of the gas cell wall, thereby enhancing the system's sensitivity to acoustic pressure variations induced by the photo-acoustic effect. In such configurations, the addition of more than a single layer of optical fiber wrapping around the gas cell may become unnecessary and may even be undesirable. This is because the inherent stiffness of the glass optical fiber rapidly becomes the predominant factor in the total stiffness of the tube-plus-fiber assembly. Consequently, the mechanical compliance of the gas cell is effectively governed by the stiffness of the optical fiber after just one layer of wrapping. Limiting the optical fiber to a single layer may not only maintain the desired sensitivity and responsiveness of the system but may also prevent the over-constraining of the gas cell wall, which could diminish the detection capabilities. Furthermore, this approach may simplify the manufacturing process and reduce material usage, contributing to the overall efficiency and cost-effectiveness of the optical measurement system.

In some examples, polymer optical fibers or small-diameter silica fibers are employed in the optical waveguide sensor to reduce the mechanical stiffness of the fiber. By utilizing fibers with lower stiffness, the system may allow for longer lengths of sensing fiber to be wrapped around the gas cell without the fiber's stiffness dominating the overall stiffness of the tube-plus-fiber assembly. This configuration enhances the sensitivity of the optical measurement system to acoustic pressure variations induced by the photoacoustic effect, as the increased length of the more compliant sensing fiber can detect minute deformations of the gas cell wall over a greater surface area. The use of polymer fibers or smaller diameter silica fibers thus permits a greater interaction length between the optical fiber and the gas cell, improving the detection capabilities of the system while maintaining the desired mechanical compliance. This approach not only optimizes the sensitivity and specificity of gas detection but also allows for increased flexibility in the design and integration of the optical measurement system into various applications.

Optionally, the system comprises a resonant cantilever arranged at least partially within the gas cell, wherein the resonant cantilever is configured to deform in response to changes in acoustic pressure, wherein the optical waveguide sensor is attached to the resonant cantilever, and wherein the optical waveguide is arranged such that the deformation is measurable by the optical waveguide sensor through detection of a deformation-induced properties change of the optical waveguide such as length change and/or a strain of the optical fiber.

In some advantageous examples, the resonant cantilever is integrated into the wall of the gas cell.

The cantilever's resonant properties amplify the response to the acoustic signals, leading to larger deformations for the same acoustic pressure levels, thus providing an enhanced sensitivity to the system. The direct measurement of these deformations by the attached optical waveguide sensor translates to highly accurate gas concentration readings.

The integration of a resonant cantilever in this system effectively exploits the mechanical resonance properties of the cantilever to enhance the system's response to acoustic signals generated by the photoacoustic effect. The (clamped) resonant cantilever may be configured to have a natural resonance frequency that coincides with or is harmonically related to the frequency of the acoustic signals generated within the gas cell. As a result, when acoustic pressures corresponding to these frequencies occur, the cantilever undergoes resonant vibrations, which are more pronounced than non-resonant vibrations. This resonant amplification leads to larger mechanical deformations for the same levels of acoustic pressure compared to non-resonant systems. The effect of this can be twofold: it not only enhances the sensitivity of the system but also improves the detectability of lower concentration gases which produce weaker acoustic signals.

By responding with greater amplitude at its resonance frequency, the cantilever allows for the detection of subtle changes in acoustic pressure that may be undetectable in systems lacking such resonant characteristics. This heightened sensitivity can be important for applications requiring the detection of trace amounts of gas, where even minimal concentrations can be important. The direct measurement of these amplified deformations via an attached optical waveguide sensor translates these physical deformations into measurable optical signals with high precision.

The optical waveguide sensor may be advantageously attached to the resonant cantilever, for instance positioned to measure the deformation-induced strain or changes in length of the cantilever. As the cantilever deforms in response to acoustic pressures, these deformations alter the optical properties of the waveguide sensor, such as changing the path length or inducing strain in an exemplary fiber Bragg grating. These changes are optically quantifiable and are used to derive accurate readings of the gas concentrations.

The direct correlation between the cantilever's deformations and the optical measurements made by the waveguide sensor ensures that the system provides highly accurate and reliable readings of gas concentrations. The resonant cantilever may be configured to have a mechanical resonance at frequencies relevant to the expected acoustic signals generated by the photoacoustic effect of the target gases.

Optionally, the optical waveguide sensor is surface mounted onto the resonant cantilever.

Such mounting optimizes the sensor's ability to detect and measure deformation-induced strains or changes directly and efficiently. Surface mounting reduces the mechanical complexity and potential interference from external factors, further increasing the reliability and accuracy of the measurement. Such particular arrangement allows for direct detection of deformation-induced strains or changes on the cantilever.

By attaching the sensor directly to the surface of the cantilever, the system eliminates the need for additional mechanical components that would typically be required to transmit mechanical movements from the cantilever to a more remotely located sensor. This reduction in parts not only simplifies the overall design but also minimizes points of potential mechanical failure, thus enhancing the system's robustness, durability and long-term reliability.

In some examples, the surface-mounted sensor is inherently shielded by its integration into the cantilever structure, reducing the influence of such external disturbances. This integration ensures that the measurements are predominantly responsive to the acoustic effects induced by the targeted gas interactions and not to spurious external signals.

The utilization of a resonant cantilever microphone with optical readout facilitated by an optical fiber bonded to its base confers significant benefits over conventional microphone configurations, particularly in terms of resistance to fouling and electromagnetic interference. The optical pressure sensing mechanism, being inherently non-electrical, minimizes the exposure of sensitive components to the gas sample, thereby reducing susceptibility to fouling caused by particulate matter, condensates, or chemical deposits within the gas cell. The optical fiber, serving as the optical waveguide sensor, can be effectively isolated from the gas environment, and the absence of exposed electrical contacts mitigates the risk of performance degradation due to contaminant accumulation. Furthermore, the reliance on optical signal transmission renders the system substantially unaffected by electromagnetic interference. Unlike electrical signal-based sensors, the optical signals within the fiber are not perturbed by external electromagnetic fields or radio frequency noise, ensuring consistent and reliable measurements even in environments with high electromagnetic activity. This robustness against electromagnetic interference enhances the system's applicability in industrial settings where electromagnetic noise may be prevalent, thereby improving the accuracy and reliability of gas detection and identification.

Optionally, the surface mounted optical waveguide includes at least one of: a Bragg grating based unit, a ring resonator unit, a Fabry-Perot interferometer unit or a fiber laser unit, configured to detect deformation of the resonant cantilever by measuring strain-induced changes in the optical properties of said surface mounted optical waveguide and convert this to a change in the wavelength response of the waveguide unit.

The optical waveguide sensor can be implemented using several techniques, each enhancing the sensor's responsiveness to specific types of deformation. For instance, a fiber Bragg grating (FBG) can be used to measure strain along the surface of the cantilever, where the grating reflects light at varying wavelengths depending on the strain experienced. Similarly, a ring resonator may be employed to detect changes in the optical path length of the resonator around the cantilever, which alters due to bending and stretching. These exemplary arrangements allow the sensor to produce a direct and quantifiable optical output that correlates closely with the mechanical deformations induced by the acoustic pressures, thereby facilitating accurate and reliable gas detection and analysis.

Bragg grating involves the use of a segment of optical fiber that contains a periodic variation in refractive index. When mechanical strain is applied to the fiber, due to deformation of the cantilever, for instance, the periodicity of the refractive index can be altered, thereby shifting the wavelength of light that the grating reflects. This shift is measurable and directly correlates to the degree of strain, making e.g. FBGs extremely useful for detecting small deformations. The precision of FBG technology ensures high-resolution detection capabilities, facilitating the accurate quantification of acoustic pressures induced by the photoacoustic effect. Other Bragg grating based fiber sensors are phase-shifted fiber Bragg grating, chirped fiber Bragg grating, Long Period grating, multi-sections FBG, grating with multiple periodicities etc.

Ring resonators are loop-shaped waveguides that confine light in the loop while using a separate waveguide for light in and out-coupling. Mechanical deformations, such as those caused by acoustic pressures, alter the physical dimensions of the resonator, particularly its perimeter. This alteration changes the resonant frequencies of the ring, affecting the wavelengths of light that can circulate within the ring and coupled out by the output waveguide. The sensitivity of ring resonators to minute changes in their geometry makes them very suitable for measuring small-scale deformations in a high-Q environment, thereby providing another layer of sensitivity and accuracy in the detection system.

Fabry-Perot interferometers use the principle of multiple beam interference between two highly reflective reflectors. This can be constructed in optical waveguide. When mounted on a deformable cantilever for example, any strain-induced changes in the distance between these reflectors modify the interference pattern of light transmitted through or reflected by the interferometer. By analyzing these changes, the Fabry-Perot interferometer can provide highly precise measurements of the cantilever's deformation, directly linking mechanical displacement to changes in detected light patterns.

A fiber laser may utilize a doped optical fiber as the gain medium, where the fiber also incorporates Bragg grating as reflectors to form a laser cavity. When mechanical strain impacts the fiber, it affects the grating and the cavity, and thus the laser's operational characteristics, primarily its output wavelength and intensity. These changes are directly indicative of the strain magnitude, making fiber lasers not only sources of coherent light but also sensitive detectors of mechanical deformation.

The incorporation of these optical waveguide technologies on a surface-mounted platform offers multiple advantages. Firstly, they enable the direct and precise measurement of physical deformations in the cantilever without the need for complex mechanical or electronic transduction systems. Secondly, these technologies provide high sensitivity and specificity in measurements due to their inherent high resolution and direct optical output.

Optionally, the optical fiber has at least one reflector, and wherein the system comprises an interferometer configured to perform interrogation by emitting light towards the at least one reflectors and to measure changes in the interference pattern produced by the reflection from the at least one reflectors in the optical fiber, and wherein the measurement is correlated changes in the length of the optical fiber caused by variations in acoustic pressure within the gas cell.

In some examples, a fiber interferometer may be used with one sensing arm and one reference arm wherein the sensing arm is wrapped on the gas cell. Then the sensing arm only has one reflector.

The interferometer is configured to have a light source to emit light towards the reflectors embedded within the optical fiber. As the light travels through the fiber, it encounters these reflectors, which partially reflect the light back towards the source.

Changes in the acoustic pressure within the gas cell, resulting from the photoacoustic effect induced by the excitation light source, lead to physical deformations of the gas cell. These deformations translate into variations in the length and/or the geometric alignment of the optical fiber. When the fiber's length or shape alters, even minutely, the distance light travels before reflecting changes, which in turn alters the interference pattern observed by the interferometer.

The sensitivity of the interferometer to these minute changes allows for the detection of extremely subtle variations in fiber length. This high resolution can be important for detecting low concentrations of gases, as the acoustic effects produced by such concentrations may only slightly alter the fiber.

By measuring changes in the interference pattern produced by one or more reflections within the fiber, the interferometer directly correlates these optical measurements to physical deformations caused by acoustic pressures.

It will be appreciated that there may be several configurations of interferometer. In some examples, only one reflection may be used in each fiber. Other examples may use for example two reflections in the same fiber.

The interferometer setup is adaptable to different types of gases and environmental conditions by simply adjusting parameters such as the light wavelength and the properties of the reflectors within the fiber. This adaptability ensures the system can be tailored to specific detection needs without requiring significant hardware changes.

It will be appreciated that the term "strain-induced changes in the optical properties," is inclusive of variations in the length of the fiber. This interpretation is important because changes in fiber length directly impact the optical path length, thereby influencing the response observed in the interferometer system. Such changes could result from mechanical strain or stress applied to the fiber, which alters its physical dimensions and, consequently, its optical characteristics.

Optionally, the optical waveguide sensor has a fiber that is optically coupled to a mode-locked laser configured to generate a pulse train output, wherein the pulse train output comprises multiple wavelengths with predetermined differences in optical frequency, and wherein the system is configured to utilize changes in the interference pattern of these wavelengths, induced by variations in the length of the fiber resulting from acoustic pressure changes within the gas cell, to measure said fiber length variations.

This setup is particularly beneficial for reducing coherence issues in the interferometric measurements caused by unwanted reflections and for increasing the resolution of the measurements of fiber length changes induced by acoustic pressures. The use of multiple wavelengths with a reduced coherence length of the light source helps in distinguishing subtle changes in interference patterns caused by small deformations.

The use of a mode-locked laser can be important for optimizing the functionality of the optical measurement system that identifies gases via the photoacoustic effect. Mode-locked lasers are capable of emitting light in a series of ultrafast pulses with multiple wavelengths, characterized by a fixed difference in optical frequency between them. This results in a pulse train output where these different wavelengths are phase-locked together, creating periodic peaks of high optical intensity.

One of the primary advantages of utilizing a mode-locked laser in this system pertains to its property of a broad spectral bandwidth related to the multiple wavelengths and hence the ability to manage coherence issues commonly encountered in interferometric measurements. Traditional single wavelength lasers with long coherence lengths can lead to complex interference patterns, especially when multiple reflections are involved, as these can interfere destructively or constructively at various points along the optical path. This can obscure or distort the measurements of changes in the optical path of the sensing fiber, which are important for assessing the acoustic pressures within the gas cell.

A mode-locked laser, with its inherently shorter coherence length due to the presence of multiple wavelengths, significantly mitigates these issues. The reduced coherence length helps to localize the interference effects to a more manageable scale, which eliminates interference by unwanted reflections to simplifies the interpretation of interference patterns and enhances the quality of measurements.

The utilization of a pulse train output with multiple wavelengths allows for a high-resolution detection of length changes in the optical fiber that result from variations in acoustic pressure induced by the photoacoustic effect. Each wavelength within the pulse train can be thought of as sampling the optical path length at different points in time and space within the fiber, providing a multidimensional view of the changes occurring along the length of the fiber.

This high-resolution capability enables the detection system to discern very subtle changes in the length of the fiber, which may be caused by minor deformations of the gas cell or small variations in acoustic pressure. The ability to detect these minute changes can be important for the accurate determination of gas concentrations, particularly when dealing with low concentrations or when attempting to differentiate between gases with similar physical properties but slight differences in their photoacoustic responses.

By shortening the coherence length, the mode-locked laser can simplify the interference pattern, making it easier to analyze and more reliable for measuring changes in the fiber induced by acoustic pressures.

Optionally, the optical waveguide sensor includes a sensing arm of an interferometer, configured to measure changes in the optical path length of the fiber that are induced by variations in acoustic pressure within the gas cell.

The integration of a sensing arm within an interferometer setup allows for highly sensitive detection of changes in the optical path length. As the light passes through the sensing arm of the interferometer, any variation in the optical path length causes a corresponding phase shift in the light waves. This phase shift can be detected as a change in the interference pattern formed when the light from the sensing arm is combined with light from a reference path. By analyzing these changes in the interference pattern, the system can accurately compute the magnitude of the acoustic pressure and, thus, deduce the gas concentration.

Such arrangement is particularly effective because it allows for continuous monitoring and real-time analysis of the gas environment, providing dynamic responses to changes in gas concentration.

Optionally, the system is configured to use relaxation times associated to different gas species for selective detection of trace gases.

By tailoring the detection system to recognize specific relaxation times, the system can differentiate between gases with similar spectral signatures but different physical properties, enhancing the selectivity and specificity of the gas detection process.

Vibration-translation (VT) relaxation times can be unique to each gas species and represent the characteristic time it takes for the energy absorbed from light to translate into macroscopic kinetic energy, manifesting as sound in a photoacoustic setup. By distinguishing gases based on VT relaxation times, the system can accurately identify gases that may have overlapping absorption spectra but differ in their dynamic response to energy absorption. This is particularly valuable in complex mixtures where traditional spectral analysis may fail due to such overlaps.

Utilizing VT relaxation times allows the system to focus on a molecular-level physical property that is inherent to each type of gas. In environments where multiple gases are present, traditional detection methods based solely on absorption peaks can lead to false readings or misidentification. The use of relaxation times can provide an improved discriminative factor that reduces these errors, providing a more reliable and accurate gas analysis.

The system may integrate hardware and software components capable of emitting light with modulated frequencies that span a range corresponding to the expected VT relaxation times of target gases. By observing the photoacoustic response over this range of modulation frequencies, the system can construct a profile of how different gases respond to the excitation over time.

The waveguide sensor and the processing unit within the system may be configured have direct response to the pressure change in the gas cell and to analyze the frequency response of the gases and match them to known VT relaxation time profiles stored in a database. This match allows the system to identify the gas or gases present in the sample by correlating the measured acoustic responses with specific VT relaxation times.

Optionally, the system includes a laser source configured to emit light at predetermined wavelengths and a predetermined modulation, selected based on preselected relaxation times of the target gas species, and wherein the system is configured to couple these selected wavelengths to the optical waveguide sensor, which is configured to detect changes in the optical fiber length induced by the acoustic responses of target gas species.

Such an approach ensures that the excitation light is optimally matched to the absorption characteristics of specific gases. The wavelengths and the modulation are selected based on the relaxation times of target gases. By matching the laser wavelength with the specific absorption characteristics of target gases and selecting the proper modulation amplitude and/or frequency, influenced by their unique relaxation times, the system is tailored to detect specific gases with high selectivity. This tailored approach reduces interference from gases with similar absorption peaks but different relaxation characteristics, thereby enhancing the accuracy of gas identification.

The specificity of the wavelength selection ensures that the maximum amount of energy is absorbed by the target gas, thus maximizing the photoacoustic effect. This maximization leads to stronger acoustic signals from the desired gas, improving the detection sensitivity and the signal-to-noise ratio.

By optimizing the wavelength of the excitation light and the predetermined modulation, the system can operate more efficiently. This efficiency is due to the reduced need for broad-spectrum light scanning or multiple adjustments to find the effective absorption peak, thereby speeding up the detection process and reducing operational complexity.

The use of dedicated laser sources for each target gas may enable to detect multiple gases simultaneously or in quick succession without the need for wavelength tuning to cover the different absorption wavelength of different gasses during the detection process. This setup is ideal for environments where multiple gases need to be monitored concurrently, such as in industrial or environmental settings.

The employment of laser technologies capable of generating light at precise wavelengths allows for a robust and adaptable system. This capability ensures that even slight variations in the target gases' absorption characteristics can be accommodated, thus maintaining high detection accuracy across different gas types and concentrations.

In some examples, the gas species are not merely adjacent to, but is actually contained within, the waveguide itself, indicative of a hollow-core fiber gas sensing approach. The hollow-core fiber, serving as the optical waveguide sensor, is structured to allow the target gas species to permeate its internal cavity. By filling the hollow core of the fiber with the gas, direct interaction between the light and the gas is facilitated. As the laser light travels through the hollow core of the fiber, it interacts with the gas molecules inside. This interaction is important for the detection mechanism employed by the system, as it leverages the specific acoustic responses of the gas species when exposed to light at the selected wavelengths and changes the optical path length of the hollow core fiber. The sensor's ability to detect minute changes in optical fiber length underlines its sensitivity and the precision of the system in identifying and analyzing the presence and behavior of different target gas species within the hollow-core optical waveguide.

Optionally, multiple excitation light sources are coupled to the gas cell, wherein each excitation light source is configured to emit light at a preset wavelength usable for the identification of different trace gases.

This multiplexing capability allows simultaneous detection of various gases. Each of these light sources can be specifically tailored to emit at a distinct wavelength that matches the absorption lines of different trace gases within the gas cell. This provides the ability to conduct parallel detections of various gases. By employing multiple lasers or light sources, each aligned to a specific absorption wavelength of different gases, the system can monitor multiple gases in one go. This results in a more efficient analysis, reducing the overall detection time and enhancing the throughput of the system. Since the waveguide sensor is detecting the pressure change in the gas cell generated by photoacoustic effect, the response to the different wavelengths can be identified by switching the light source in a predetermined sequences or applying different modulations to the different light source to distinguish the wavelengths.

With multiple excitation light sources, the system can be easily adapted to detect a wide range of gases by simply incorporating additional light sources set to the appropriate wavelengths. This versatility makes the system suitable for diverse applications, ranging from environmental monitoring to industrial process control, where different gases may need to be detected under varying conditions.

By utilizing specific light sources for each target gas, the system minimizes the potential for spectral overlap and interference, which can occur in systems using a single tunable light source for multiple gases.

The combination of light from different light source can be realized using optical multiplexing technology to generate one single input interface with the gas cell. Therefore, no modification of the gas cell is required for the multi-wavelength configuration.

The ability to detect multiple gases simultaneously using dedicated light sources for each gas reduces the need for mechanical adjustments or manual intervention to change light sources or adjust wavelengths. This design not only simplifies the operational complexity of the system but also reduces the wear and potential mechanical failures associated with moving parts, leading to lower maintenance needs and better longevity of the system.

Optionally, a modulation frequency of a single light beam is scanned in order to discriminate between two or more gases having a same absorption wavelength, but different relaxation times in the carrier gas.

Since VT relaxation times are intrinsic molecular properties that dictate how quickly a molecule transfers absorbed energy to its surroundings as kinetic energy (sound), they provide a unique 'fingerprint' for gases. By scanning across a range of modulation frequencies, the system can identify the specific frequency at which the photoacoustic response of a gas maximizes, corresponding to its relaxation time.

The overall design and operation of the gas detection system can be simplified. Instead of requiring multiple lasers or light sources each tuned to different spectral characteristics or absorption lines of various gases, a single light source with adjustable modulation frequency can be employed. This reduction in hardware complexity not only lowers costs but also minimizes maintenance and improves system reliability.

By utilizing the modulation frequency as a variable parameter, the system gains the ability to more precisely measure the acoustic response at various frequencies. This capability ensures that the detection is not only based on the presence of an acoustic signal but also on its specific frequency characteristics, which are directly tied to the molecular dynamics of the gas. The precise matching of modulation frequencies to the VT relaxation times enhances the sensitivity and specificity of the gas detection, reducing false positives and improving detection limits. For the optimization of the response, the modulation frequency can be extended by dedicated waveform and amplitude of the modulation.

In some examples, the acoustic modulation frequency is swept in order to determine the VT relaxation time of the gas that is being excited. By recording the amplitude and phase of the acoustic signal at each frequency, the system can construct a detailed profile of the gas's acoustic response, enabling the discrimination between gases with similar optical absorption but different dynamic responses to energy absorption.

In an example where a laser with a single optical wavenumber is used to measure concentrations $n_i$ of multiple trace gas species, each possessing a well-characterized absorption cross-section at that wavenumber, it can be assumed that the VT relaxation time $\tau_i$ for each gas species is known and distinct.

Photoacoustic spectroscopy (PAS) systems designed for trace gas detection traditionally utilize acoustically narrow-band excitation for two main reasons. Firstly, utilization of a resonant gas column enhances the acoustic signal for a given absorption by leveraging the quality factor Q. Secondly, narrow-band detection mechanisms, such as lock-in amplifiers or resonant transducers like quartz tuning forks, are employed where the signal-to-noise ratio (SNR) scales with $1/\sqrt{B}$, B being the bandwidth.

In conventional narrow-band PAS, the measurement yields only a single acoustic amplitude and one phase measurement at the specific acoustic excitation frequency. These data points allow the determination of at most two trace gas concentrations, provided the acoustic frequency is positioned between $1/\tau_1$ and $1/\tau_2$. When more than two trace gas species are present, this measurement approach can result in ambiguities.

Optionally, a PAS system with broad-band acoustic excitation and detection is employed to facilitate the measurement of both phase and amplitude of the sound wave across a range of frequencies f. This complex frequency response of the gas mixture, denoted as M(f), represents the cumulative contributions from different species, where each contribution is scaled by the concentration $n_i$ of that particular species. The response $M(f) = SUM(n_i * R_i(f), i)$, with $R_i(f)$ being the known complex-valued response curves ("Pa/ppm") of the individual species. Importantly, each of these response curves $R_i(f)$ has an inflection point at $2\pi i f = 1/\tau_i$, marking the VT relaxation time of species i. At this inflection point, the response transitions from $R(f<<)$ approximately $1/f$ to $R(f)$ approximately $1/f^2$, providing a unique shape for each $R_i(f)$ due to differing VT relaxation times. If the acoustic frequency range encompasses $1/\tau_i$ for all species present, a numerical fitting procedure can accurately determine the concentrations $n_i$ for an arbitrary number of species.

Optionally, the gas cell is configured with a multi-pass optical arrangement to increase the path length of the excitation light within the gas cell.

According to an aspect, the invention provides for a method for identifying a gas in a sample using a photoacoustic effect, comprising the steps of: placing a gas sample within a gas cell; directing light from an excitation light source with amplitude and/or wavelength modulation into the gas cell, wherein the light has a wavelength that matches an absorption line of the gas to be identified; inducing a photoacoustic effect within the gas cell by the interaction of the directed modulated light and the gas; measuring a value indicative of an acoustic pressure generated in the gas cell resulting from the photoacoustic effect using an optical waveguide sensor system arranged adjacent to the gas cell; identifying a value indicative of a gas concentration based at least on the measured value indicative of the acoustic pressure using a processing unit.

The optical waveguide sensor system may comprise the optical waveguide sensor configured to transduce the acoustic pressure variations within the gas cell into corresponding changes in the optical domain, and an interrogator configured to measure these changes in an optical parameter, such as detecting phase variations in an interference signal using, for example, a $3\times3$ detection interferometer. Advantageously, it is not necessary for the interrogator to be physically attached to or situated adjacent to the gas cell. Instead, it can be advantageous to position the interrogator in proximity to the processing unit or to integrate its functionality within the processing unit itself. This configuration allows for efficient signal transmission from the optical waveguide sensor to the interrogator via optical fibers, thereby significantly simplifying the design and reducing the complexity at the gas cell location. By consolidating the interrogator with the processing unit, the system benefits from streamlined data acquisition and processing capabilities, improved signal integrity due to reduced environmental exposure at the sensor site, and enhanced overall system efficiency. This arrangement also facilitates easier maintenance and potential scalability of the system, as the interrogator and processing unit can be housed together, possibly in a controlled environment, while the more ruggedized sensor components remain adjacent to the gas cell where the measurements occur.

It will be appreciated that any of the aspects, features and options described in view of the system apply equally to the method and the described device and use. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:

Fig. 1          shows a schematic diagram of an embodiment of a system;
Fig. 2          shows a schematic diagram of an embodiment of a system;
Fig. 3          shows a schematic diagram of an embodiment of a system;
Fig. 4a, 4b    show a schematic diagram of an embodiment of a system;
Fig. 5          shows a schematic diagram of an embodiment of a system;
Fig. 6          shows a schematic diagram of an embodiment of a system;
Fig. 7          shows a schematic diagram of an embodiment of a system;
Fig. 8          shows a schematic diagram of an embodiment of a system;
Fig. 9          shows a schematic diagram of an embodiment of a system;
Fig. 10        shows a schematic diagram of an embodiment of a system;
Fig. 11        shows a schematic diagram of an embodiment of a system;
Fig. 12        shows a schematic diagram of a graph.

DETAILED DESCRIPTION

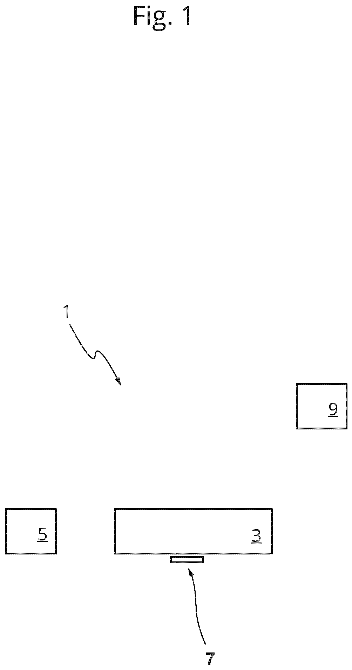

Fig. 1 shows a schematic diagram of an embodiment of an optical measurement system 1 for identification of a gas based on a photoacoustic effect. The system 1 comprises a gas cell 3 configured to contain a gas sample. Furthermore, the system 1 also has an excitation light source 5 with amplitude and/or wavelength modulation configured to direct light into the gas cell, wherein the excitation light source 5 is configured to emit light with a wavelength that matches an absorption line of the gas to be identified such as to induce a photoacoustic effect. In an advantageous way, an optical waveguide sensor 7 is arranged adjacent to the gas cell and configured to measure a value indicative of an acoustic pressure within the gas cell generated as a result of the photoacoustic effect. A processing unit 9 is provided that is configured to determine a value indicative of a gas concentration based at least on the measured value indicative of the acoustic pressure.

Optionally, a fiber-optical sensing waveguide technology is employed to measure sound pressure in photo-acoustic spectroscopy gas-cell, allowing extreme sensitivity.

In some examples, a (total) deformation of the gas-cell caused by changes in the internal pressure is measured, by wrapping a long and thin sensing fiber around a thin-walled tube gas-cell. This configuration allows for precise measurement of gas-induced deformations, translating directly into optical fiber length changes. This method is particularly sensitive to variations in internal gas pressures, providing an accurate and direct method for gas detection and concentration measurement.

In some examples, deformation of a resonant cantilever is measured using an optical waveguide based (e.g. fiber) sensor. The deformation can be measured by either a fiber interferometer to detect the deformation induced length change or a fiber grating technology based sensor to detect the deformation induced strain of the sensing fiber which is mounted on the cantilever.

It will be appreciated that other optical waveguide interferometric sensing technologies may also be utilized, e.g. ring resonator, Fabry-Perot cavity, etc.

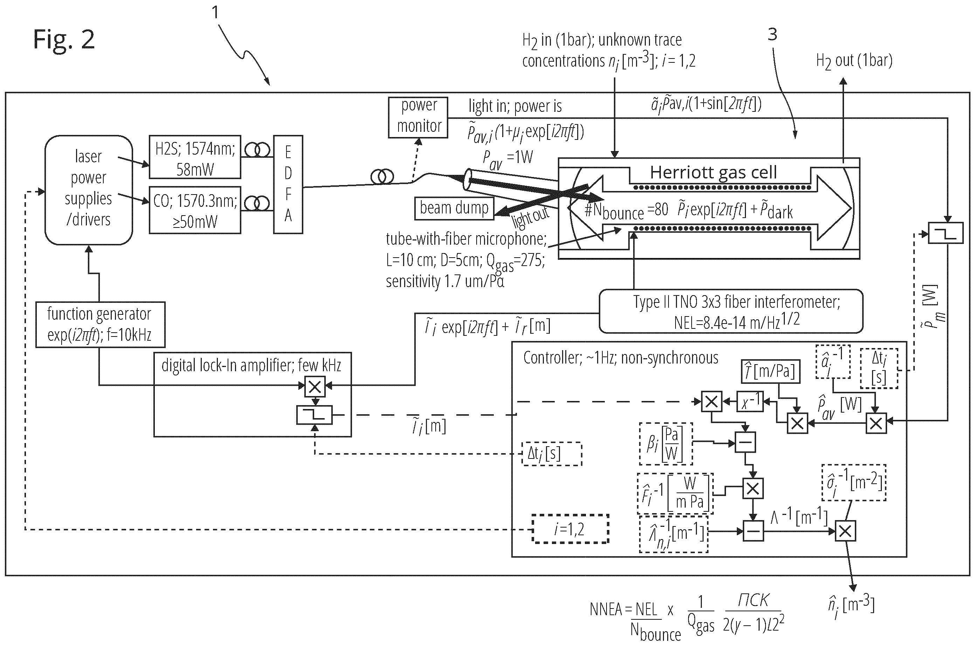

Fig. 2 shows a schematic diagram of an embodiment of a system 1. In this example, the system is provided with laser power supplies/drivers. These components generate light at specific wavelengths corresponding to the absorption lines of target gases. In the exemplary depicted setup, two laser wavelengths are highlighted: 1574 nm for H2S and 1570.3 for CO, indicating the system's ability to selectively target different gas species. A function generator is provided that can modulate the light at a frequency of 10 kHz. The modulation frequency can be matched to the acoustic resonance frequencies of the gas samples within the tube. Furthermore, the example shows a digital lock-in amplifier, which can be used to enhance signal detection by locking onto the exact modulation frequency of the light, thus improving the signal-to-noise ratio and sensitivity of the system 1.

In this exemplary system 1, a tube-with-fiber microphone is employed. For example, a thin-walled polymer tube wrapped with optical fiber acts as a resonant gas cell. This tube's deformation due to acoustic pressures can be measured for example interferometrically, translating the physical changes into measurable optical signals.

Various configurations are possible. In this example, a Herriott gas cell is depicted. The Herriott cell setup utilizes multiple reflections to enhance the light path and increase the interaction with the gas. This configuration amplifies the amount of light interacting with the gas by using mirrors to multiply the path length of the light within the gas cell. This increase in interaction boosts the sensitivity of the system, making it highly effective in detecting low concentrations of gases. This design uses a multi-pass configuration facilitated by the large diameter of the tube.

Furthermore, a 3x3 fiber interferometer is utilized that can measure relatively small changes in the fiber length due to acoustic pressure variations, with a specified noise-equivalent length (NEL) of 8.4e-14 m/Hz^(1/2).

A controller and power monitor is depicted that can be used to manage the operation of the system, ensuring synchronization and monitoring the power output of the laser.

The system 1 may include an inlet for hydrogen gas at a specific pressure and an outlet, demonstrating the system's capability to handle continuous gas flow, which is typical in real-time monitoring applications.

A Noise-Equivalent Normalized Absorption, NNEA, is a metric used in the field of spectroscopy, particularly in systems like photoacoustic spectroscopy (PAS), to quantify the sensitivity of the system in detecting trace amounts of substances. Essentially, NNEA measures the smallest detectable absorption signal that can be distinguished above the noise level of the measurement system, normalized to a specific unit of measurement. In the context of PAS and similar systems, the NNEA value can be important as it indicates how low the concentration of a gas can be measured with confidence given the inherent noise of the system. Lower NNEA values indicate lower detection limit, enabling the detection of smaller concentrations of a gas or other analyte. In some examples, the NNEA can be assumed to be limited by noise-equivalent-length of the interferometer.

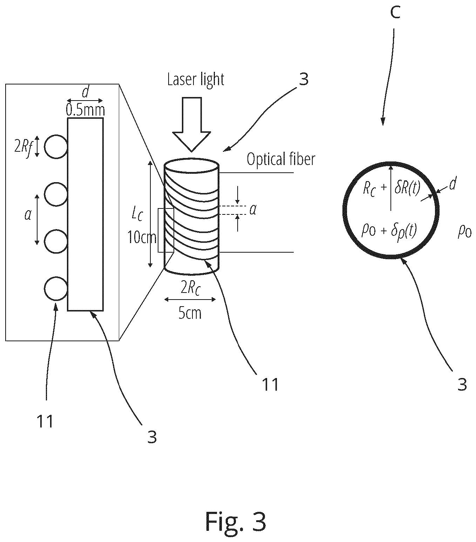

Fig. 3 shows an exemplary configuration of the optical measurement system 1 for measuring gas concentrations using the photoacoustic effect. Only a part of the system is shown with regard to the optical sensing. An optical fiber 11 is wrapped around the cylindrical gas cell 3, which contains the gas sample to be analyzed. The fiber exhibits variations in dimensions such as $Rc+\delta R(t)$ in radius due to physical effects influenced by the acoustic pressure $p0+\delta p(t)$. The gas cell has a cylindrical form with a defined diameter (2Rc) and length (Lc) in this example. The gas cell facilitates the containment and interaction of the gas with the excitation light.

A modulated laser light is directed vertically downwards onto the gas cell, which induces a photoacoustic effect by matching the wavelength of the light with an absorption line of the target gas.

In some examples, the tube has a relatively large diameter, for instance larger than 3 cm, more preferably larger than 4 cm. For example, a 5 cm diameter tube (as depicted in the figure) may enhance measurements. The tube primarily acts as a gas resonator, achieving a remarkably high quality factor (Q). This high Q-factor is important as it greatly amplifies the tube deformation caused by the acoustic signals generated within the tube by the photoacoustic effect, thereby enhancing the sensitivity and specificity of the gas detection. Furthermore, the relatively large diameter of the tube allows for the implementation of Herriott mirrors in a multi-pass configuration. This arrangement significantly increases the effective path length of the laser light within the gas sample, magnifying the interaction between the laser light and the gas molecules. The use of these mirrors can boost the effective laser power for example by more than 60 times. This is particularly beneficial because it maximizes the energy available for the photoacoustic effect, despite the inherently lower pressure driving term per absorbed Watt due to the large diameter of the tube.

This provides for an improvement in the system's sensitivity, as evidenced by an exceptionally low noise-equivalent normalized absorption (NNEA) value of 0.3 nW/m/Hz^(1/2) in some examples.

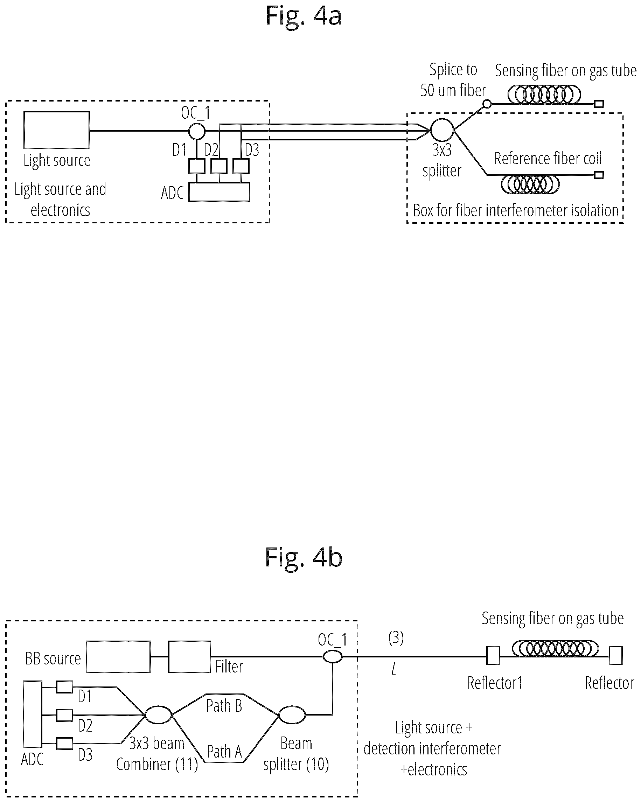

Figs. 4a, 4b show a schematic diagram of an embodiment of a system 1. Only a part of the system is shown with regard to the optical sensing. A tube-with-fiber configuration provides high sensitivity and selectivity for gas detection. One example (Fig. 4b) involves the use of two reflectors positioned at both ends of the sensing fiber. This setup allows for interrogation using a separated detection interferometer instead of a complete interferometer using one arm for the sensing fiber (Fib. 4a). Another example combines the optical fiber with a mode-locked laser for the interrogator. This method leverages the generation of multiple wavelengths with a fixed difference in optical frequency. The alignment of these wavelengths in phase results in a pulse train output, which is highly effective for detecting minute changes in the fiber's length and, consequently, the acoustic pressures within the gas cell.

In some examples, the optical fiber can serve as the sensing arm of a standard interferometer (Fig. 4a). The embodiment may also include a Herriott cell configured for a multi-pass arrangement, which significantly amplifies the interaction of light with the gas sample by increasing the effective path length of the laser light.

Furthermore, the relatively wide opening of the tube design can facilitate an easy coupling of multiple lasers, each tuned to detect a specific gas. This allows the system to monitor multiple trace gases simultaneously.

A mode-locked laser can play an important role in enhancing the sensitivity of the photoacoustic spectroscopy system. By generating multiple wavelengths with a predetermined optical frequency difference, the laser produces a coherent pulse train when these wavelengths phase-align. This pulse train can be important for the interferometric measurement of fiber length changes. As the acoustic pressure within the gas cell varies, so does the length of the fiber, which alters the interference pattern of the pulse train. This change in the interference pattern is then analyzed to quantify the gas concentration.

Using a mode-locked laser, which has a broader optical spectrum which results in a shorter coherence length in comparison to standard single narrow linewidth laser, can ensure that only light waves close in physical proximity within the fiber will interfere. This sharply reduces the interference effects from light that has traveled further distances within the fiber, encountering multiple reflections. The interference pattern thus becomes simpler and more localized, corresponding directly to the specific segment of the fiber where deformation (from acoustic pressure changes) is occurring and needs to be measured.

By curtailing the range over which interference can occur, mode-locked lasers help isolate the measurement signal generated in the fiber region of interest, namely, where the fiber detects the gas-induced deformation. This isolation improves the clarity of the interference patterns obtained from the measurement by limiting unwanted interference generated by reflections in the fiber outside the region of interest. The reduced complexity in interference patterns allows for an improved analysis and interpretation of the data. This leads to more accurate measurements of the deformation induced by the photoacoustic effect, as the signal processing algorithms deal with a cleaner and more distinct set of data.

In the example shown in fig. 4a, a sensing fiber is provided as part of an fiber interferometer. The system has a light source that can provide a primary excitation source to provide light to generate the interference signal. The light source for the photoacoustic effect may be a separated light source, which is not shown in fig. 4. The light source in fig. 4 can be part of the interferometer system for the fiber length sensing.

Furthermore, an exemplary optical circulator (OC-1) is arranged, arrange to direct the light from the light source to the interferometer and route the light with the interference signal from the optical fiber towards detection components. Detectors (D1, D2, D3) are configured to capture and convert optical signals into electronic signals, which are then processed by the associated Analog-to-Digital Converter (ADC). This setup facilitates the measurement of changes in the optical properties of the fiber, indicative of acoustic pressure variations within the gas cell. The sketched interferometer is based on an exemplary 3x3 splitter. This is used to split the light from the optical circulator towards two different paths; one leading to the fiber attaching to the gas measurement setup and another towards the reference fiber coil.

In this example, the sensing fiber is wrapped around the gas tube, configured to detect changes in length and strain induced by the photoacoustic effect. The reference fiber coil acts to balance or reference the interferometric measurements which is isolated from the pressure effect in the gas cell,. Light reflected from the end of both the sensing fiber and the reference fiber are recombined by the 3x3 splitter to generate 3 optical interference signals which are transported to the 3 detectors (D1, D2, D3). The phase of the interference signal is directly related to the optical path difference (OPD) between the sensing fiber and the reference fiber.

The interferometric setup may for example be shielded from environmental interferences, such as thermal fluctuations and mechanical vibrations, which could introduce unwanted signal in the interferometric measurement of the optical path difference (OPD) and affect the precision and accuracy of the pressure measurements by the sensing fiber. An enclosure or box may be used for such exemplary isolation.

In some examples, the optical fibers may be optionally interconnected using splices to ensure efficient light transmission and minimal signal loss across the components of the system.

The system 1 comprises an interferometer configured to perform interrogation by emitting light towards the optical fibers and measuring changes in the interference pattern produced by the reflections. This measurement correlates with changes in the length of the optical fiber caused by variations in acoustic pressure within the gas cell. The analog-to-digital converter (ADC) can be configured to convert optical signals detected by D1, D2, and D3 into digital signals for processing by the system's processing unit to determine gas concentration based on the acoustic pressure measurements. A two-beams interferometer generates interference signal by combining two beam and the phase of the interference signal is proportional to the optical path difference (OPD) between the two beams. When the reference beam from the reference fiber is unchanged, the variation in the OPD is caused by the change in the sensing fiber.

Fig. 4b shows a schematic diagram of an embodiment of a system 1 with remotely detection interferometer. The system uses an interferometric measurement setup with reflectors at both ends of the sensing fiber to measure changes in fiber length due to deformation. In this example, the light emitted by the broadband light source is filtered by means of an optical filter before it enters the main optical pathway via the circulator, ensuring that only the desired spectral bandwidth of the light is utilized which has a short coherence length Lc in comparison to 2 times the optical path length between the two reflectors of the sensing fiber. This ensures the two reflections will not generate interference when returning to the circulator and redirected to the detection interferometer. The detection interferometer has a beam splitter to split the light into two path (path A and path B) with a compensation path difference (CPD) where path A is the longer path. The compensation path difference is chosen to be similar to the optical path difference between Reflector 1 and Reflection 2 of the sensing fiber. Part of the light reflected by Reflector 1 through Path A will arrive the 3x3 beam combiner. While part of the light reflected by Reflector 2 through the shorter Path B will arrive the 3x3 beam combiner. The effective path difference between these two beams is OPD-CPD. If this is smaller than the coherence length Lc of the light, interference occurs after combining by the beam combiner. Detectors are used to convert the optical interference signal to an electrical signal for the calculation of the phase of the interference signal.

In this configuration, the beam splitter divides the returning light beam into two paths, path A and path B, with a compensation path difference CPD) where path A is longer than path B by the CPD. The CPD is chosen to match the optical path difference between the reflections from Reflector 1 and Reflector 2 in the sensing fiber. Light reflected from Reflector 1 travels through the longer path A, while light reflected from Reflector 2 travels through the shorter path B. These two beams are then combined at the $3\times3$ beam combiner, resulting in an interference pattern when the effective path difference between them is less than the coherence length of the light source. Detectors convert the resulting optical interference signals into electrical signals, which can be digitized by the analog-to-digital converters (ADC). This setup enables precise measurement of changes in the length of the sensing fiber due to acoustic pressure variations within the gas cell by analyzing the interference pattern produced by the reflections from the two reflectors in the optical fiber.

In Figure 4A and 4B a 3x3 type of interferometer is used to generate 3 optical interference signals. The advantages is a phase calculation which is not sensitive to changes in other parameters of the interference signal which are the amplitude and the visibility. This results is a simple calculation of the phase of the interference signal which is related to the pressure in the gas-cell.

The tube-with-fiber configuration provides a significant departure from conventional photoacoustic spectroscopy (PAS) systems, which typically utilize narrow gas tubes to maximize pressure amplitude, based on the principle that pressure amplitude inversely scales with the square of the tube diameter. Contrary to traditional expectations, the inventors have determined that while using a larger diameter tube appears counterintuitive, it actually benefits the system in a surprising way: the noise-equivalent pressure (NEP) also scales with the inverse square of the diameter, effectively neutralizing the expected decrease in pressure amplitude. This groundbreaking insight permits the employment of larger diameter tubes, which not only facilitates the integration of a simple Herriott multi-pass mirror, thereby enhancing the effective laser power absorption by for example approximately 80 times but also significantly improves the quality factor (Q) of the gas resonance. The larger tube diameter increases the Q of the gas resonance by a factor of ten, exponentially boosting the system's sensitivity and making it a formidable tool in the detection of trace gases with heightened precision.

In various embodiments, the diameter of the tube in the tube-with-fiber microphone system is defined within certain predetermined ranges to optimize the photoacoustic effect and enhance system sensitivity. In some examples, the tube diameter is at least about 3 centimeters (cm), but not more than about 12 cm. In certain preferred embodiments, the tube diameter may be in a range of 3 to 6 cm, providing a good balance between increased resonance quality factor and manageable tube dimensions.

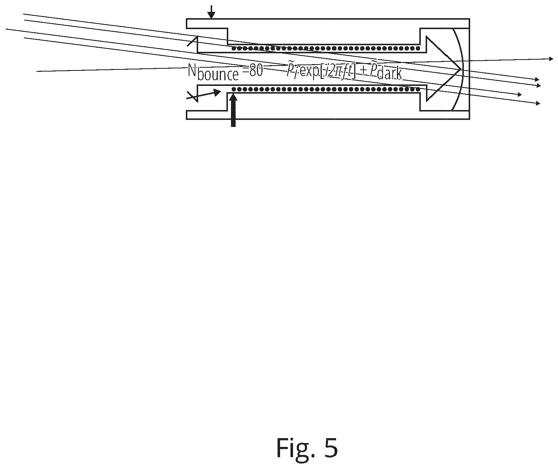

Fig. 5 shows a schematic diagram of an embodiment of Herriot cell with multi-pass configuration as part of a system 1. Multiple arrows are shown to enter the cell, indicating the use of various excitation light sources. These light sources are modulated either in amplitude or wavelength to match the absorption lines of specific gases, inducing a photoacoustic effect. The Herriott cell configuration can be effectively used for setups with a large diameter tube to maintain low noise-equivalent pressure levels. The configuration may be designed to allow light beams to pass through the gas sample multiple times (indicated by the repetitive directional arrows), significantly boosting the interaction between light and gas. For example, in this example, Nbounces=80 suggest a design feature that allows light to bounce multiple times (e.g. 80) within the cell, increasing the effective path length and therefore the sensitivity of the gas detection system.

The dots represent the optical waveguide sensor. This sensor is arranged for detecting the acoustic pressure changes within the gas cell, which are a direct result of the photoacoustic effect. In this example, a fiber-wrapped design around the gas cell or adjacent components is employed. However, other arrangements and configurations are also envisaged.

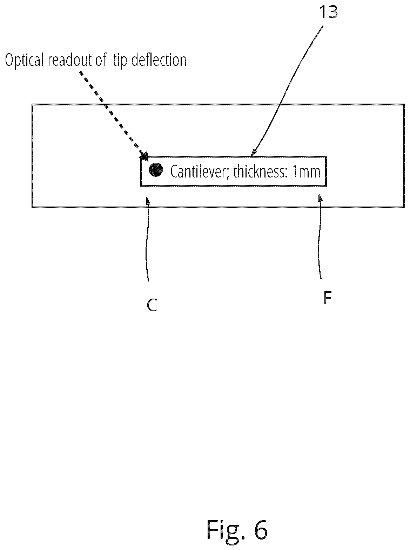

Fig. 6 shows a schematic diagram of a top view of an embodiment of a system 1 with a resonant cantilever microphone system incorporated within a photoacoustic spectroscopy (PAS) gas detection assembly. The cantilever 13 may be a clamped on one side F and have a free end C on another side. It will be appreciated that other configurations are also envisaged.

An optical readout mechanism is illustrated with a dashed red line. This optical readout is important for measuring the deflection of the cantilever tip, which is sensitive to acoustic pressures generated within the gas cell. A narrow air gap, for example less than 1 mm, is shown adjacent to the cantilever. This design feature minimizes acoustic leakage, which can be important for maintaining the sensitivity and accuracy of the gas detection system.

The resonant cantilever is engineered to deform in response to changes in acoustic pressure within a gas cell. This deformation is detected by the optical waveguide sensor, which measures deformation-induced length changes or strain of the waveguide. This exemplary configuration leverages the cantilever's mechanical sensitivity to provide a highly responsive and accurate system for detecting low concentrations of gaseous contaminants.

A cantilever is depicted with an exemplary thickness of 1 mm. In this example, the cantilever extends over a length of 1.7 cm from the massive base to the tip. The cantilever may be mounted on a massive block with a thickness significantly greater than 1 mm, providing a stable base that enhances the sensitivity and reliability of the measurements by reducing external vibrations and noise. It will be appreciated that various other dimensions and configurations are possible.

Exemplary Configuration Details:

Mode-shape of cantilever vibration ($\alpha$): 1.875, dimensionless, indicating the mode shape factor.
Young modulus (E): 7.65E+10 Pa, describing the elasticity of the cantilever material.
Mass density (rho): 2.65E+03 kg/m$^3$, representing the density of the cantilever material.
Cantilever length (L): 1.70E-02 m, critical for determining the resonant frequency and sensitivity.
Cantilever thickness (d): 1.00E-03 m, influencing the mechanical strength and vibrational characteristics.
Resonant radial frequency (omega): 1.89E+04 rad/s, essential for defining the operational frequency range.
Resonant frequency (f): 3.003E+03 Hz, the frequency at which the cantilever naturally vibrates.
Static deflection (dz/dp): 1.64E-09 m/Pa, measures the displacement per unit pressure.
Noise-equivalent length of TNO interferometer (NEL): 8.40E-14 m/sqrt(Hz), indicating the precision of length measurement.
Assumed quality factor of cantilever (Qt): 1000, reflecting the damping characteristics of the cantilever.
Effective noise-equivalent pressure (NEP): 5.13E-08 Pa/sqrt(Hz), a crucial measure of the system's sensitivity to pressure changes.
Radius of gas resonator tube (Rc): 2.00E-03 m, indicating the size of the resonant tube.
Hydrogen sound speed (c): 1320 m/s, the speed of sound in hydrogen, relevant for acoustic calculations.
Length of gas resonator tube (Lc): 2.20E-01 m, critical for acoustic resonance characteristics.
Ratio of specific heats of hydrogen (gamma): 1.4, essential for thermodynamic calculations.
Assumed quality factor of gas resonator (Qgas): 22, indicating the resonance quality.
Calculated PAS cell factor (F): 3.71E+01 Pa/W/m, a specific parameter for the efficiency of the PAS cell.
Calculated noise-equivalent absorption (NNEA): 1.38E-09 W/m/sqrt(Hz), representing the sensitivity of the system to detect trace gases.
The estimated sensitivity of the resonant cantilever microphone is calculated using the following equation:

(NEL / (Q_gas * Qt)) * (8 * pi / a^4) * (rho * d * Rc^2 * omega^3 / (gamma - 1)) wherein:

NEL: Noise-equivalent length of interferometer
Q_gas: Assumed quality factor of the gas resonator
Qt: Assumed quality factor of the cantilever
pi: Mathematical constant II
a: Mode-shape of cantilever vibration
rho: Mass density of the cantilever
d: Cantilever thickness
Rc: Radius of gas resonator tube
omega: Resonant radial frequency of the cantilever
gamma: Ratio of specific heats of hydrogen

This equation allows for the calculation of the system's sensitivity, factoring in physical properties and operational frequencies.

The design of the resonant cantilever microphone may assume zero acoustic leakage through the air gap. It may be operated under the premise that noise is predominantly limited by interferometric readout at 3kHz, with the mechanical 1/f spectrum of the interferometer sufficiently suppressed to avoid significant interference. It will be appreciated that further optimization of the cantilever dimensions may be performed. Damping in the system is dominated by air interactions, and operating at significantly reduced pressures (below 1 bar) could potentially increase the Qt, improving sensitivity but necessitating the use of a vacuum pump to maintain these conditions. Detailed knowledge of the vibration-translation (VT) relaxation times of different gases may be important to effectively determine the lowest effective operational pressure, enabling precise tuning for specific gas detection.

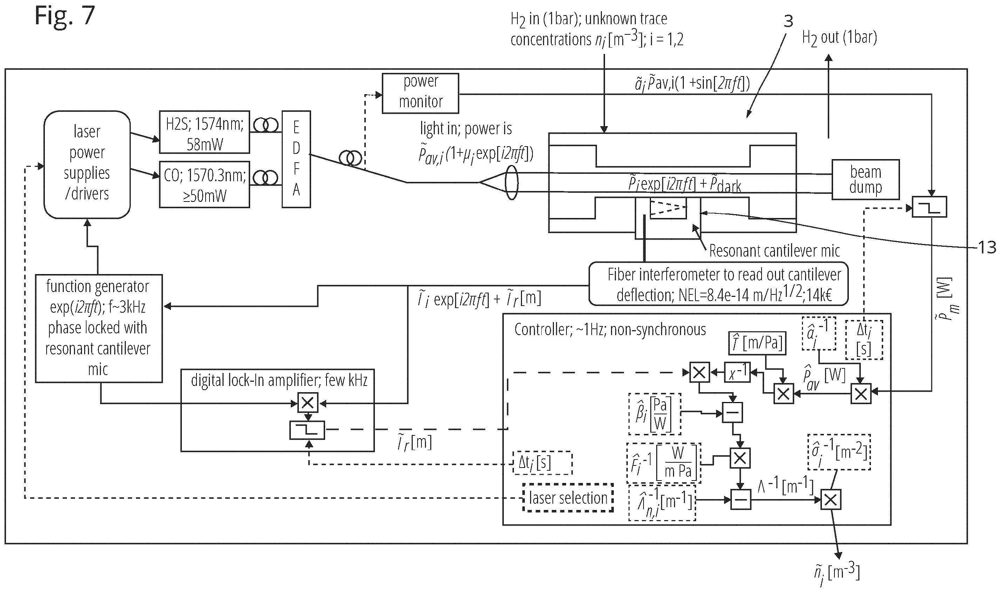

Fig. 7 shows a schematic diagram of an embodiment of a system 1 similar to the example shown in fig. 2. Unlike the tube-with-fiber design from exemplary embodiment of fig. 2, this setup uses a resonant cantilever microphone with waveguide sensor. This component acts as a highly sensitive acoustic detector that can measure minute deformations caused by acoustic pressure variations in the gas cell. The cantilever's design is tuned to have a high quality factor (Q), enhancing its sensitivity to specific frequencies.

The system 1 uses a fiber interferometer specifically configured to measure the deflection of the resonant cantilever. The mechanical motion of the cantilever can be effectively converted into an optical signal that can be quantitatively analyzed.

The readout subsystem can be tailored to manage the data acquisition from the cantilever's oscillations and the resulting optical signals detected by the interferometer. Measurement modules may be provided that process the length changes in the optical fibers due to cantilever deflection.

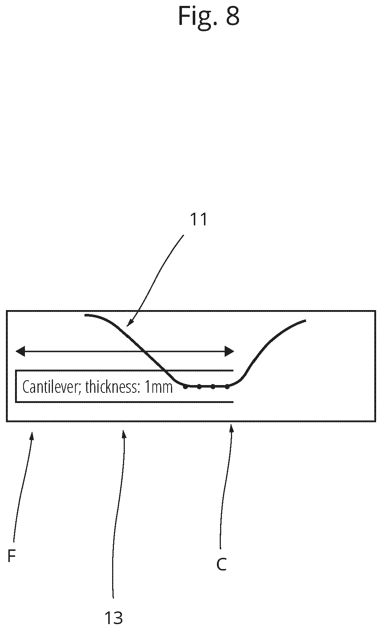

Fig. 8 shows a schematic diagram of a top view of an embodiment of a system 1. The cantilever 13 acts as the primary mechanical element that responds to acoustic vibrations. It can translate the acoustic energy from the gas cell 3 (partially) into measurable mechanical deformations. The optical waveguide sensors, specifically designed for high sensitivity, are attached and/or integrated onto the surface of the cantilever. These sensors are capable of detecting minute deformations in the cantilever 13, induced by acoustic pressures. The placement of these sensors is optimized to capture the full spectrum of mechanical strain experienced by the cantilever 13, enhancing the accuracy and reliability of the measurements. A narrow air gap may be maintained between the cantilever 13 and the adjacent structures to ensure minimal acoustic leakage, which is important for maintaining the integrity of the photoacoustic measurements.

In operation, the cantilever reacts to variations in acoustic pressure within the gas cell, a component of the larger system designed to detect and measure trace gas concentrations through the photoacoustic effect. The integrated optical waveguide sensors, may include various configurations like Fiber Bragg Gratings, fiber lasers, Fabry-Perot cavity, ring resonator etc. that are configured to detect this deformation. The sensors convert the physical strain into optical signals, which are then interpreted by the system's processing unit to provide a detailed analysis of gas concentration.

The shown exemplary configuration is designed to improve the photoacoustic response by ensuring that the cantilever's movement is both significant enough to be detectable and isolated enough to prevent noise interference. The optical readout method chosen for this setup is particularly advantageous for its high sensitivity and low susceptibility to environmental noise, making it ideal for applications requiring precise gas detection and characterization. This arrangement offers a robust solution for detecting low concentrations of gases with high precision.

Exemplary configurations and dimensions are shown in the figure. For example, the resonant cantilever, as depicted, has a length of 1.7 cm. The cantilever's thickness is 1 mm. Additionally, the configuration showcases a narrow air gap, approximately 50 microns, strategically positioned to minimize acoustic leakage and enhance the fidelity of the acoustic-to-optical signal conversion. The base supporting the cantilever is a massive aluminum block, substantially thick (greater than 1 mm), providing a stable foundation and minimizing vibrational noise from the environment. It will be appreciated that various other configurations and dimensions may be employed.

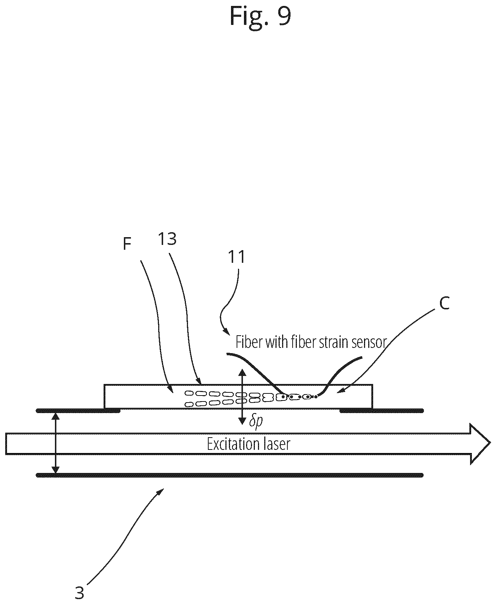

Fig. 9 shows a schematic diagram of a side view of an embodiment of a system 1. This system has a cylindrical gas resonator configured to contain a gas sample. An excitation laser light is directed into the resonator to interact with the gas molecules, chosen specifically to match the absorption line of the target gas, thus inducing a photoacoustic effect. Adjacent to this gas resonator is an optical waveguide sensor. The sensor includes a fiber 11 with an embedded fiber strain sensor, designed to measure the deflection of the cantilever induced surface strain. The (dynamic) deflection(s) result from the photoacoustic effect generated by the interaction of the excitation laser with the gas molecules.

The cantilever is configured and arranged to respond mechanically to acoustic pressures generated within a nearby gas cell. The cantilever 13 is depicted with a base (clamping part) where it is secured, extending to a free end, thereby defining its length direction. Integrated along the cantilever, closer to its base than to the free end, is an optical fiber. This fiber is strategically positioned to monitor the deformation of the cantilever due to acoustic pressures. As the cantilever 13 deforms, the fiber experiences strain-induced changes in its optical properties, primarily along the portion of the cantilever 13 where it is attached.

The optical fiber running along the cantilever is essential for transforming mechanical strains into optical signals that can be quantitatively analyzed. The positioning of the fiber closer to the base of the cantilever is particularly advantageous for enhancing sensitivity to smaller strains, which are more pronounced near the clamped section.

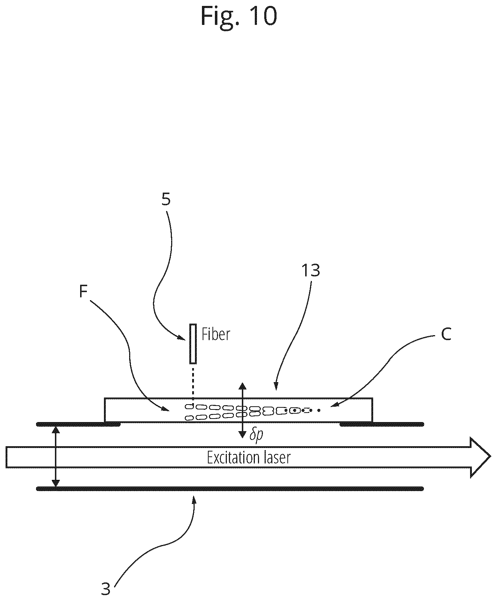

Fig. 10 shows a schematic diagram of an embodiment of a system 1 comprising an excitation light source, a resonant cantilever 13, and an optical waveguide sensor 5. The resonant cantilever is arranged at the gas cell 3. The resonant cantilever is engineered to deform responsively to changes in acoustic pressure generated by the photoacoustic effect. An optical waveguide sensor 5, comprising an optical fiber with one or more optical reflectors, is provided to project light to and collect light from the cantilever 13. Light reflected from the fiber reflector and light reflected by the cantilever are used for interferometric measurement.

The interferometer setup is capable of interrogating the optical fiber by emitting light towards the fiber's reflectors and measuring changes in the interference pattern produced by these reflections. These measurements correlate with changes in the length of the optical fiber caused by variations in acoustic pressure within the gas cell, thereby providing a direct method to quantify gas concentrations.

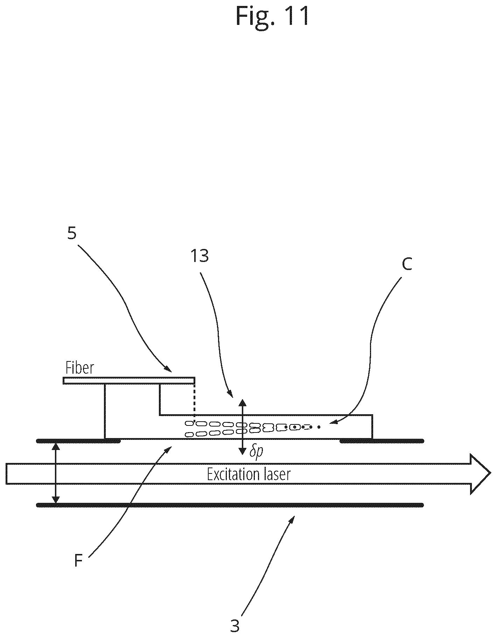

Fig. 11 shows a schematic diagram of an embodiment of a system 1. In this example, the optical fiber, with reflector and lens to project light to and collect light from the cantilever, is arranged differently compared to the example shown in fig. 11. A deflection mirror can be used to direct the beam to the cantilever. Light reflected from the fiber reflector and light reflected by the cantilever can be used for interferometric measurement.

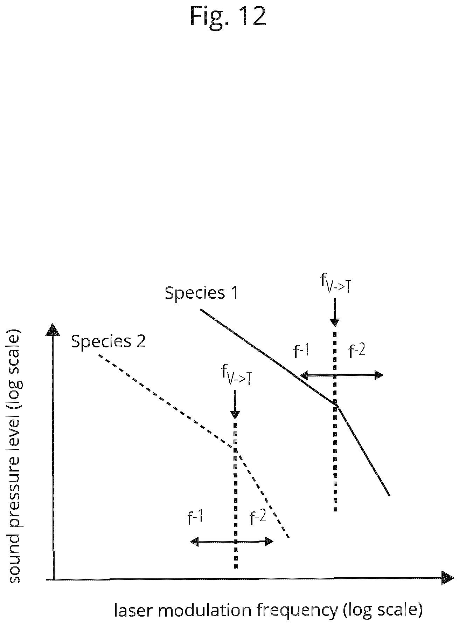

Fig. 12 shows a schematic diagram of a graph illustrating frequency-selective discrimination of gases in photoacoustic spectroscopy. A graphical representation of the frequency-dependent photoacoustic response of two distinct gas species within a photoacoustic spectroscopy system, is shown, utilizing laser modulation frequency on a logarithmic scale as the x-axis, and sound pressure level on a logarithmic scale as the y-axis. The graph depicts two distinct curves, one for each gas species, labeled as species 1 and species 2.

Unique molecular characteristics of different gases, particularly their vibration-translation (VT) relaxation times, can be exploited to achieve selective and precise gas detection in photoacoustic spectroscopy (PAS). VT relaxation time, the period it takes for absorbed energy by a gas molecule to translate into an acoustic pressure wave, is an important parameter in PAS. This molecular property varies between different gases and provides a distinctive signature that can be exploited for accurate identification. Traditional PAS systems generally operate at a single acoustic frequency, linked to the laser modulation frequency, which limits their ability to differentiate between gases with similar absorption peaks. By employing a broad-band acoustic excitation approach, the complex frequency response can be measured across a range of frequencies. This advantageously enables to observe the point where the response changes, corresponding to the VT relaxation time of each gas. To enhance this differentiation, another trace species like water or SF6, which couples efficiently, can be added to shift the VT relaxation frequency. This approach not only broadens the capability of PAS to detect and discriminate between multiple trace gases using a single optical wavelength but also significantly enhances the sensitivity and selectivity of the system, making it adept at identifying low concentrations of contaminants crucial in sensitive applications.

Species 1 shows a characteristic response peak at modulation frequency $f\_VT$, indicating the vibration-translation relaxation frequency specific to this species. The response then declines as the frequency moves away from this peak. Species 2, which also exhibits a peak at its specific vibration-translation relaxation frequency $f\_VT$, albeit at a different frequency value compared to Species 1, demonstrating the unique acoustic fingerprint of each gas based on its molecular properties.

For each species, distinct frequency markers f1 and f2 are shown. These markers define the breadth of the measurable photoacoustic effect around its respective $f\_VT$.

It will be appreciated that the configurations and dimensions illustrated herein are exemplary and serve primarily to demonstrate the functionality and effectiveness of the integrated optical waveguide sensors in a resonant cantilever setup. It should be understood that these specifications can be adjusted according to specific requirements. Various modifications to the dimensions, materials, and arrangement of components are possible and are fully envisaged within the scope of this invention, allowing for enhanced adaptability and optimization in different applications.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

**Claims**

1. An optical measurement system for identification of a gas based on a photoacoustic effect, comprising:

   a gas cell configured to contain a gas sample;
   an excitation light source with amplitude and/or wavelength modulation configured to direct light into the gas cell, wherein the excitation light source is configured to emit light with a wavelength that matches an absorption line of the gas to be identified such as to induce a photoacoustic effect by modulation of the amplitude or the wavelength of the light source;
   an optical waveguide sensor arranged adjacent to the gas cell and configured to measure a value indicative of an acoustic pressure within the gas cell generated as a result of the photoacoustic effect; and
   a processing unit configured to determine a value indicative of a gas concentration based at least on the measured value indicative of the acoustic pressure.

2. The optical measurement system of claim 1, wherein the optical waveguide sensor includes at least one optical fiber attached to the gas cell and/or a component connected to the gas cell.

3. The optical measurement system of claim 2, wherein the optical fiber is wrapped around at least a part of the gas cell.

4. The optical measurement system of claim 3, wherein the optical fiber is wrapped in multiple layers around at least a part of the gas cell.

5. The optical measurement system of any one of the preceding claims, wherein the system comprises a resonant cantilever arranged at least partially within the gas cell, wherein the resonant cantilever is configured to deform in response to changes in acoustic pressure, wherein the optical waveguide sensor is attached to the resonant cantilever, and wherein the optical waveguide is arranged such that the deformation is measurable by the optical waveguide sensor through detection of a deformation-induced length change and/or a deformation-induced strain of the optical fiber.

6. The optical measurement system of claim 5, wherein the optical waveguide sensor is surface mounted onto the resonant cantilever.

7. The optical measurement system of claim 6, wherein the surface mounted optical waveguide includes at least one of: a Bragg grating based unit, a ring resonator unit, a Fabry-Perot interferometer unit or a fiber laser unit, configured to detect deformation of the resonant cantilever by measuring strain-induced changes in the optical properties of said surface mounted optical waveguide and convert this to a change in the wavelength response of the waveguide unit.

8. The optical measurement system of any one of the preceding claims 2-6, wherein the optical fiber has at least one reflector, and wherein the system comprises an interferometer configured to perform interrogation by emitting light towards the at least one reflectors and to measure changes in the interference pattern produced by the reflection from the at least one reflectors in the optical fiber, and wherein the measurement is correlated changes in the length of the optical fiber caused by variations in acoustic pressure within the gas cell.

9. The optical measurement system of any one of the preceding claims 2-8, wherein the optical waveguide sensor has a fiber that is optically coupled to a mode-locked laser configured to generate a pulse train output, wherein the pulse train output comprises multiple wavelengths with predetermined differences in optical frequency, and wherein the system is configured to utilize changes in the interference pattern of these wavelengths, induced by variations in the length of the fiber resulting from acoustic pressure changes within the gas cell, to measure said length variations.

10. The optical measurement system of any one of the preceding claims 2-9, wherein the optical waveguide sensor includes a sensing arm of an interferometer, configured to measure changes in the optical path length of the fiber that are induced by variations in acoustic pressure within the gas cell.

11. The optical measurement system of any one of the preceding claims, wherein the system is configured to use relaxation times associated to different gas species for selective detection of trace gases.

12. The optical measurement system of claim 10, wherein the system includes a laser source configured to emit light at predetermined wavelengths and a predetermined modulation, selected based on preselected relaxation times of the target gas species, and wherein the system is configured to couple these selected wavelengths to the optical waveguide sensor, which is configured to detect changes in the optical fiber length induced by the acoustic responses of target gas species.

13. The optical measurement system of any one of the preceding claims, wherein multiple excitation light sources are coupled to the gas cell, wherein each excitation light source is configured to emit light at a preset wavelength usable for the identification of different trace gases.

14. The photo-acoustic spectroscopy gas cell of any one of the preceding claims, wherein a modulation frequency of a single light beam is scanned in order to discriminate between two or more gases having a same absorption wavelength, but different relaxation times in the carrier gas.

15. A method for identifying a gas in a sample using a photoacoustic effect, comprising the steps of:

   placing a gas sample within a gas cell;
   directing light from an excitation light source with amplitude and/or wavelength modulation into the gas cell, wherein the light has a wavelength that matches an absorption line of the gas to be identified;
   inducing a photoacoustic effect within the gas cell by the interaction of the directed modulated light and the gas;
   measuring a value indicative of an acoustic pressure generated in the gas cell resulting from the photoacoustic effect using an optical waveguide sensor arranged adjacent to the gas cell;
   identifying a value indicative of a gas concentration based at least on the measured value indicative of the acoustic pressure using a processing unit.

Fig. 1

1

9

5

3

7

Fig. 2

NNEA = $\frac{NEL}{N_{bounce}}$ x $\frac{1}{Q_{gas}}$ $\frac{\Pi C K}{2(\gamma - 1)L2^2}$

Fig. 3

## Fig. 4a

## Fig. 4b

Fig. 5

13

Optical readout of tip deflection

● Cantilever; thickness: 1mm

C

F

Fig. 6

Fig. 7

EP 4 726 364 A1

Fig. 8

Cantilever; thickness: 1mm

11

F

13

C

# Fig. 9

# Fig. 10

# Fig. 11

Fig. 12

## EUROPEAN SEARCH REPORT

**Application Number**

EP 24 20 6467

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG SHUCHAO ET AL: "Optical interferometer-based methods for photoacoustic gas sensing: a review", APPLIED SPECTROSCOPY REVIEWS., vol. 59, no. 3, 10 April 2023 (2023-04-10), pages 382-421, XP093224403, US ISSN: 0570-4928, DOI: 10.1080/05704928.2023.2196729 | 1,2, 5-10,15 | INV. G01N21/17 G01N29/24 |
| Y | * the whole document * | 11-14 | |
| X | JIN W ET AL: "Gas detection with micro- and nano-engineered optical fibers", OPTICAL FIBER TECHNOLOGY, vol. 19, no. 6, 19 September 2013 (2013-09-19), pages 741-759, XP028788782, ISSN: 1068-5200, DOI: 10.1016/J.YOFTE.2013.08.004 | 1-10,15 | |
| Y | * the whole document * | 11-14 | |
| X | CN 113 252 572 A (UNIV DALIAN TECH) 13 August 2021 (2021-08-13) | 1,2, 5-10,15 | TECHNICAL FIELDS SEARCHED (IPC) |
| Y | * the whole document * | 11-14 | G01N |
| Y | ALAIN GLIÈRE ET AL: "Challenges in the Design and Fabrication of a Lab-on-a-Chip Photoacoustic Gas Sensor", SENSORS, vol. 14, no. 1, 8 January 2014 (2014-01-08), pages 957-974, XP055261056, DOI: 10.3390/s140100957 | 11,12,14 | |
| A | * the whole document * | 1,15 | |
| Y | US 2004/094716 A1 (EVAN WEBBER MICHAEL [US]) 20 May 2004 (2004-05-20) | 13 | |
| A | * paragraphs [0027] - [0048]; figures * | 1,15 | |

The present search report has been drawn up for all claims

| Place of search | Date of completion of the search | Examiner |
|---|---|---|
| Munich | 4 April 2025 | Politsch, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 6467

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2025

| Patent document cited in search report | | Publication date | Patent family member(s) | Publication date |
|---|---|---|---|---|
| CN 113252572 | A | 13-08-2021 | NONE | |
| US 2004094716 | A1 | 20-05-2004 | NONE | |

EPO FORM P0459

For more details about this annex : see Official Journal of the European Patent Office, No. 12/82